# EUROPEAN PATENT SPECIFICATION

(11) **EP 3 328 220 B1**
(45) Date of publication and mention of the grant of the patent: **26.12.2018**
(21) Application number: 16733544.7
(22) Date of filing: 30.06.2016
(51) Int. Cl.: A23L 29/00, A23P 10/20, A23L 29/269, A23L 23/10

(54) **SAVOURY CONCENTRATE COMPRISING INORGANIC SALT, FAT AND GELLAN GUM**
WOHLSCHMECKENDES KONZENTRAT MIT ANORGANISCHEM SALZ, FETT UND GELLAN
CONCENTRÉ SAVOUREUX COMPRENANT UN SEL INORGANIQUE, DE LA MATIÈRE GRASSE ET LA GOMME GELLANE

(30) Priority: 31.07.2015 EP 15179333
(43) Date of publication of application: 06.06.2018
(73) Proprietor: Unilever NV, 3013 AL Rotterdam (NL); Unilever PLC, London, Greater London EC4Y 0DY (GB)
(72) Inventor: BLIJDENSTEIN, Theodorus, Berend, Jan, 3133 AT Vlaardingen (NL); MELLEMA, Michel, 3133 AT Vlaardingen (NL); DE OLIVEIRA, Marcelo, Camilo, 74074 Heilbronn (DE); SILVA PAES, Sabrina, 3133 AT Vlaardingen (NL)
(74) Representative: Tjon, Hon Kong Guno
(86) International application number: PCT/EP2016/065237
(87) International publication number: WO 2017/021073

(56) References cited:
- DATABASE GNPD [Online] MINTEL; January 2014 (2014-01), Anonymous: "Paitan Hot Pot Cube", XP002747705, Database accession no. 2275370

## Description

### TECHNICAL FIELD OF THE INVENTION

The present invention relates to a savoury concentrate, more particularly a savoury concentrate that can be used in the preparation of broths, bouillons, soups, sauces, gravies etc. to improve taste as well as appearance and texture. The savoury concentrate can be provided in the form of, for instance, cubes, pellets or granulates.

The savoury concentrate of the present invention contains:
a) 22-85 wt.% inorganic salt;
b) 2-60 wt.% fat;
c) 0.8-8 wt.% of gellan gum; and
d) 0-25 wt.% of glutamate component selected from glutamic acid, edible glutamate salts and combinations thereof;e) 0-25 w.% starch component selected from native starch, pregelatinised starch, maltodextrin, modified starch and combinations thereof;f) 0-20 wt.% of sugar selected from monosaccharides, disaccharides and combinations thereof;g) 0-45 wt.% of vegetable matter selected from vegetables, herbs, spices and combinations thereof;h) 0-10 wt.% water; wherein the components a) to e) together constitute at least 55 wt.% of the savoury concentrate and wherein the components a) to h) together constitute at least 75 wt.% of the savoury concentrate.

The present invention also provides a process of preparing a savoury concentrate, said process comprising:
- providing the savoury concentrate mixture containing inorganic salt, fat, gellan gum and optionally further components; and
- converting the savoury concentrate mixture into shaped articles or granules.

### BACKGROUND OF THE INVENTION

The use of bouillon cubes to provide taste in soups, gravies, sauces and other similar food products is well known. Bouillon cubes typically contain salt, sugar, fat, binders, herbs, spices, taste enhancer (e.g. glutamate) and flavouring.

WO 2007/085609 describes a bouillon and/or seasoning tablet and/or cube, which comprises, in total % in weight, 0.5-10 % oil, and/or 0-5 % fat, binders, salt, between 1 and 5 % of total water, as well as between 0.5 and 8 % of cereal, vegetable and/or fruit fibers, as well as optionally sugar, spices, flavors, taste enhancers, dehydrated vegetables, herb leaves and/or plant extracts. The binders are taken from the group consisting of dextrose syrup, maltodextrin, citric acid, meat extract and processed flavors.

WO 2014/095196 describes a solid or semi-solid composition comprising an edible fat and an inorganic salt, wherein the composition comprises pores, and wherein the pores contain a hydrocolloid; the pores constitute from 1 to 70% of the volume of the composition. The hydrocolloid preferably comprises xanthan gum and konjac gum in a weight ratio ranging from 1.5:1 to 2.5:1. The patent examples describe the blending of a solid composition containing palm oil stearin, vegetable fat, potato starch, water and kitchen salt with a hydrogel slurry containing water, NaCl, calcium chloride dehydrate, xanthan gum and konjac gum, followed by moulding in cylinder tubes and drying.

### SUMMARY OF THE INVENTION

The inventors have developed a savoury concentrate, such as a bouillon cube, that can suitably be used in the preparation of bouillon, broth, soup, sauce or gravy, and that not only imparts taste and taste enhancement, but that additionally improves appearance and texture of the final product.

The savoury concentrate of the present invention contains:
a) 22-85 wt.% inorganic salt;
b) 2-60 wt.% fat;
c) 0.8-8 wt.% of gellan gum;
d) 0-25 wt.% of glutamate component selected from glutamic acid, edible glutamate salts and combinations thereof;
e) 0-25 w.% starch component selected from native starch, pregelatinised starch, maltodextrin, modified starch and combinations thereof;
f) 0-20 wt.% of sugar selected from monosaccharides, disaccharides and combinations thereof;
g) 0-45 wt.% of vegetable matter selected from vegetables, herbs, spices and combinations thereof;
h) 0-10 wt.% water;
wherein the components a) to e) together constitute at least 55 wt.% of the savoury concentrate and wherein the components a) to h) together constitute at least 75 wt.% of the savoury concentrate.

When used in the preparation of aqueous dishes, the savoury concentrate of the present invention offers the advantage that it imparts a velvety mouthfeel (mouth coating) that is highly appreciated and associated with homemade preparations. The aforementioned benefits are clearly perceptible even if the savoury concentrate is applied in relatively small quantities in bouillon, broth, soup, sauce or gravy.

The presence of the gellan gum in the savoury concentrate of the present invention enables the preparation of a savoury concentrate in the form of a cohesive article (e.g. a bouillon cube) or a robust granulate.

The invention also provides a process of preparing a savoury concentrate, said process comprising:
- providing the savoury concentrate mixture containing:
   ∘ 22-85 wt.% inorganic salt;
   ∘ 2-60 wt.% fat;
   ∘ 0.8-8 wt.% of gellan gum;
   ∘ optional further components; and
- converting the savoury concentrate mixture into shaped articles or granules.

### DETAILED DESCRIPTION OF THE INVENTION

A first aspect of the invention relates to a savoury concentrate comprising:
a) 22-85 wt.% inorganic salt;
b) 2-60 wt.% fat;
c) 0.8-8 wt.% of gellan gum;
d) 0-25 wt.% of glutamate component selected from glutamic acid, edible glutamate salts and combinations thereof;
e) 0-25 w.% starch component selected from native starch, pregelatinised starch, maltodextrin, modified starch and combinations thereof;
f) 0-20 wt.% of sugar selected from monosaccharides, disaccharides and combinations thereof;
g) 0-45 wt.% of vegetable matter selected from vegetables, herbs, spices and combinations thereof;
h) 0-10 wt.% water;
wherein the components a) to e) together constitute at least 55 wt.%, preferably at least 65 wt.% and more preferably at least 75 wt.% of the savoury concentrate; and wherein the components a) to h) together constitute at least 75 wt.%, preferably at least 85 wt.%, more preferably at least 90 wt.% of the savoury concentrate.

The term "fat" as used herein refers to glycerides selected from triglycerides, diglycerides, monoglycerides, phosphoglycerides and combinations thereof. The term "fat" encompasses fats that are liquid at ambient temperature as well as fats that are solid or semi-solid at ambient temperature.

The term "gellan gum" as used herein refers to an extracellular anionic polysaccharide produced by the bacterium *Sphingomonas elodea.* The molecular structure of gellan gum is a straight chain based on repeating glucose, rhamnose, and glucuronic acid units The repeating unit of the polymer is a tetrasacharide that has the following structure:
[→3)-β-D-Glcp-(1→4)-β-D-GlcpA-(1→4)-β-D-Glcp(1→4)-α-Rhap-(1→]

These tetrasacharide units are connected by (α1→3) glycosidic bonds. In its native or high acyl form, two acyl substituents - acetate and glycerate - are present in gellan gum. Both substituents are located on the same glucose residue, and on average, there is one glycerate per repeat and one acetate per every two repeats. In low acyl gellan gum, the acyl groups are removed completely.

The solid fat content at 20°C (N₂₀) can suitably be determined using ISO 8292-1 (2012) - Determination of solid fat content by pulsed NMR.

The mass weighted mean diameter of a savoury concentrate in granulated form and of particulate components of the savoury concentrate may suitably be determined using a set of sieves with different mesh sizes in case at least 80 wt.% of the material has a diameter of more than 100 µm. In case the material is a very fine powder, i.e. a powder comprising more than 20 wt.% particles with a diameter of less than 100 µm, the mass weighted mean diameter may suitably be determined by means of microscopy. The mass weighted average diameter of starch granules, for instance, can be determined from microscopic images from separate areas, each showing at least 200 starch granules. Three images are used to measure starch granules sizes. The starch granules are labelled manually, and the sizes are automatically measured in micrometers by suitable image analysis software. Further details can be found in Snyder,EM. (1984) (Snyder,EM. (1984). Chapter XXII - Industrial microscopy of starches. In: Starch: Chemistry and Technology (Second Edition) Food Science and Technology, ed. R.L.W.PASCHALL San Diego: Academic Press, 661-673). The savoury concentrate of the present invention typically comprises 30-70 wt.%, preferably 40-60 wt.% inorganic salt.

The fat content of the savoury concentrate typically is in the range of 3-35 wt.%, more preferably in the range of 5-30 wt.% fat. The fat contained in the savoury concentrate preferably has a solid fat content at 20°C (N20) of at least 5%, preferably of at least 10%.

Gellan gum is preferably applied in the savoury concentrate in a concentration of 1-6 wt.%, more preferably in a concentration of 1.2-5.5 wt.%, even more preferably in a concentration of 1.5-4.5 and most preferably in a concentration of 2-4 wt.%.

The savoury concentrate advantageously contains at least 1 wt.% of the glutamate component. More preferably, the savoury concentrate contains 2-20 wt.% of the glutamate component.

The savoury concentrate of the present invention can take the form of, for instance, a granulate a shaped article or a paste. Preferably, the savoury concentrate is a granulate or a shaped article.

In accordance with a particularly preferred embodiment of the invention, the concentrate is a shaped article having a weight of 2-50 g, said shaped article comprising the following components:
a) 35-70 wt.%, preferably 40-60 wt.% inorganic salt;
b) 5-30 wt.%, preferably 15-25 wt.% fat, said fat having a solid fat content at 20°C (N₂₀) of at least 5%;
d) 0-20 wt.%, preferably 2-18 wt.% of the glutamate component.

The shaped article preferably has a weight in the range of 2.5-30 g, more preferably in the range of 3.0-28 g and most preferably of 3.2-24 g.

The shaped concentrate article can suitably be provided in different forms. Preferably, the article is provided in the form of a cuboid, more preferably in the form of a rectangular cuboid and most preferably in the form of a cube.

The fat contained in the shaped article preferably has a N₂₀ of at least 10%, more preferably of 25-95% and most preferably of 50-90%.

In one preferred embodiment, the savoury concentrate is a granulate having a mass weighted average diameter in the range of 0.1-5 mm, said granulate comprising the following components:
a) 35-85 wt.%, preferably 40-75 wt.% inorganic salt;
b) 3-20 wt.%, preferably 4-15 wt.% fat;
d) 2-20 wt.%, preferably 5-15 wt.% of the glutamate component.

The granulate preferably has a mass weighted average diameter in the range of 0.2-2 mm, most preferably in the range of 0.25-1.5 mm.

The fat contained in the granulate preferably has a N₂₀ of 0-60%, more preferably of 5-40% and most preferably of 10-30%.

The savoury concentrate typically contains less than 9 wt.% water. More preferably, the concentrate contains 1-8 wt.% water. Most preferably, the concentrate contains 2-7 wt.% water.

Unlike the savoury concentrate described in WO 20114/095196, the savoury concentrate of the present invention preferably does not comprise pores containing hydrocolloid attached to the wall of the pores.

The inorganic salt employed in the savoury concentrate is preferably selected from sodium chloride, potassium chloride and combinations thereof. Most preferably, the inorganic salt is sodium chloride.

The inorganic salt employed in the savoury concentrate typically has a mass weighted mean diameter in the range of 5-150 µm, more preferably of 10-100 µm.

The fat employed in the savoury concentrate preferably is a vegetable fat. The term "vegetable fat" encompasses vegetable fats that have been fractionated and/or hydrogenated. Examples of vegetable fats that may suitably be used in the savoury concentrate include palm oil, palm kernel oil, coconut oil, sunflower oil, soybean oil, rapeseed oil, linseed oil, cottonseed oil, maize oil, olive oil and combinations thereof.

Besides the inorganic salt, the fat and the gellan gum, the savoury concentrate may suitably contain additional ingredients, such as starch components, taste enhancers (glutamate, yeast extract, yeast autolysate, hydrolysed vegetable protein), sugars, vegetable matter, gelatine, binders, emulsifiers (e.g. lecithin and/or monoglycerides), flavouring, colouring, minerals and vitamins.

The savoury concentrate preferably contains a starch component selected from native starch, pregelatinised starch, maltodextrin, modified starch and combinations thereof. The starch component is preferably present in the savoury concentrate in a concentration of 3-20 wt.%, more preferably of 4-18 wt.% and most preferably of 5-15 wt.%.

The combination of starch component and gellan gum is preferably present in the savoury concentrate in a concentration of 5-25 wt.%, more preferably of 7-20 wt.% and most preferably of 8-15 wt.%.

Best results are obtained with savoury concentrate of the present invention if the starch component and the gellan gum are present in a weight ratio of 2:1 to 20:1. Even more preferably, the latter weight ratio is in the range of 2.5:1 to 15:1, most preferably in the range of 3:1 to 12:1

The starch component employed in accordance with the present invention is preferably selected from native starch, maltodextrin, pregelatinised starch and combinations thereof. Even more preferably, the starch is selected from native starch, pregelatinised starch and combinations thereof. Most preferably, the starch component is native starch.

The starch component employed in the savoury concentrate typically has a mass weighted mean diameter in the range of 5-200 µm, more preferably of 10-100 µm, most preferably 12-60 µm. The gellan gum employed in the savoury concentrate preferably is a high acyl gellan gum.

According to a particularly preferred embodiment, the gellan gum employed in accordance with the present invention has a molecular weight of at least 100,000 g/mol, more preferably of at least 200,000 g/mol and most preferably of at least 400,000 g/mol. Here the molecular weight refers to molecular weight of individual polysaccharide molecules and not to a (number or weight) average molecular weight.

The gellan gum is preferably applied in the savoury concentrate in the form of a powder. The particles of this powder typically contain more than 60 wt.%, more preferably at least 80 wt.% and most preferably at least 90 wt.% of the gellan gum. The gellan gum is preferably applied in the form of a powder having a mass weighted mean diameter in the range of 30-600 µm, more preferably of 50-500 µm.

The savoury concentrate may suitably comprise 0-12 wt.%, more preferably 1-10 wt.% and most preferably 2-8 wt.% of sugar. Preferably, the sugar is selected from sucrose, glucose, fructose, lactose and combinations thereof.

In accordance with another preferred embodiment, the savoury concentrate contains 0-30 wt.% of vegetable matter selected from vegetables, herbs, spices and combinations thereof. More preferably, said vegetable matter is contained in the savoury concentrate in a concentration of 0-20%, most preferably 1-10% by weight of the savoury concentrate.

Examples of sources of vegetable matter include parsley, dill, basil, chives, sage, rosemary, thyme, oregano, leek, onion, mushrooms, broccoli, cauliflower, tomato, courgette, asparagus, bell pepper, egg plant, cucumber, carrot and coconut flesh. The vegetable matter may be applied in the form of leafs, slices, florets, dices or other pieces.

According to another preferred embodiment, the savoury concentrate contains 0-10 wt.%, more preferably 0.5-8 wt.% and most preferably 1-5 wt.% of gelatine component, said gelatine component being selected from gelatine, hydrolysed gelatine and combinations thereof.

The savoury concentrate of the present invention preferably is a packaged savoury concentrate. The portion of the concentrate as packaged preferably has a weight (excluding packaging) of 1 g to 1 kg, preferably 2-250 g, more preferably 5-50 g. The packaging can be e.g. a container, a pouch or a wrapper.

A further aspect of the invention relates to a method of preparing a savoury product selected from a broth, a bouillon, a soup, a sauce or a gravy, said method comprising the addition of the savoury concentrate. According to a particularly preferred embodiment said method comprises the addition of the savoury concentrate to a hot aqueous liquid having a temperature in excess of 60°C, more preferably in excess of 80°C.

Typically, the present method of preparing a savoury product comprises addition of the savoury concentrate in a concentration of at least 0.5% by weight of the savoury product. More preferably, the savoury concentrate is added in a concentration of 0.8-5%, most preferably of 1-3% by weight of the savoury product.

Yet another aspect of the invention relates to a process of preparing a savoury concentrate, said process comprising:
- providing the savoury concentrate mixture containing:
   ∘ 22-85 wt.% inorganic salt;
   ∘ 2-60 wt.% fat;
   ∘ 0.8-8 wt.% of gellan gum;
   ∘ optional further components; and
- converting the savoury concentrate mixture into shaped articles or granules.

The aforementioned process may suitably be employed to produce a savoury concentrate as described herein before.

The savoury concentrate mixture employed in the present process has the same composition as the savoury concentrate described herein before.

The gellan gum employed in the present process preferably is a gellan gum as defined herein before.

According to a particularly preferred embodiment, the present process comprises incorporating into the savoury concentrate mixture the gellan gum in the form of a powder having a mass weighted average diameter of 30-600 µm, more preferably of 50-500 µm.

The preparation of the savoury concentrate mixture preferably comprises addition of a small quantity of water in the form of an aqueous liquid. Typically, the savoury concentrate mixture is prepared by adding 0.5-10%, more preferably 0.8-5% and most preferably 1-3% of aqueous liquid by weight of the savoury concentrate mixture. The aqueous liquid employed typically contains at least 50 wt.%, more preferably at least 70 wt.% water.

The savoury concentrate mixture may suitably be converted into shaped articles or granules by means of compression. The compressing of the savoury concentrate mixture can be done using equipment known in the art. Examples of known techniques that can be used to form the granules and/or shaped articles include tabletting, roller compacting, extrusion, pelletising, etc.

The invention is further illustrated by the following non-limiting examples.

### EXAMPLES

### Example 1

Bouillon cubes are prepared on the basis of the recipes (in wt.%) shown in Table 1.

**Table 1**

| Ingredients | Wt.% | |
|---|---|---|
| | 1 | A |
| Sodium chloride | 52.50 | 52.50 |
| Fat¹ | 21.00 | 21.00 |
| Corn starch | 11.12 | 13.12 |
| Monosodium glutamate | 5.18 | 5.18 |
| Gellan gum | 2.00 | 0.00 |
| Sugar | 2.70 | 2.70 |
| Water | 2.70 | 2.70 |
| Vegetable matter² | 0.87 | 0.87 |
| Flavouring | 1.88 | 1.88 |
| Caramel | 0.05 | 0.05 |

| | | |
|---|---|---|
| ¹ N₂₀ = 85% ³ Contains curcumin powder, parsley flakes, garlic, onion and white pepper | | |

The cubes are prepared using the following procedure:
- sodium chloride, monosodium glutamate, sugar and corn starch are introduced into a mixer and mixed for 60 seconds, at 35 Hz;
- water and caramel are added and mixed for 120s, at 35 Hz ;
- vegetable matter is added, except for the parsley flakes, and mixed for 30 seconds, at 60 Hz;
- fat powder is added and mixed of 30 seconds, at 60 Hz;
- finally, gellan gum is added together with parsley flakes, and mixed for 120 seconds, at 60 Hz.

Subsequently, the concentrate mixtures are discharged from the mixer and kept 2 hours at ambient temperature to allow for fat crystallization. Next, the concentrate mixtures are shaped into cubes of approximately 9.5 grams by compressing the mixture into a mould.

### Example 2

Chicken soups are prepared on the basis of the recipe shown in Table 2, using the bouillon cubes described in Example 1 (bouillon cube 1 and bouillon cube A).

**Table 2**

| | |
|---|---|
| Ingredients | |
| Water | 1.4 litres |
| Chicken breast (cubes of 2x2 cm) | 300 g |
| Potatoes (cubes of 2x2 cm) | 150 g |
| Carrots (cubes of 2x2 cm) | 100 g |
| Diced green beans (in 2 cm) | 70 g |
| Chopped onions | 60 g |
| Chopped garlic | 6 g |
| Broken dry noodles (in 4 cm) | 60 g |
| Oil | 2 spoons |
| Bouillon cubes | 2 cubes of 9.5g |

The soup is prepared as follows:
- saute the onion and garlic using part of the oil
- add the chicken breast and the remainder of the oil and stir fry the pieces of chicken meat
- add the carrots and continue stir frying for a few seconds
- add the water and to bring to boil
- add the green beans and potatoes and simmer for 10 minutes using medium heating
- add the broken noodles and boil for another 10 minutes
- add the bouillon cubes and continue boiling for 10 more minutes

The soups thus prepared are evaluated by an expert panel.

The panel evaluation shows that the soup prepared with bouillon cube 1 has a more appealing taste and texture than the soup prepared with bouillon cube A.

### Example 3

Bouillons were prepared from bouillon powders containing different levels of added gellan gum, including a control sample without added gellan gum, and were evaluated by a trained QDA panel.

The composition of the bouillon powder used is shown in Table 3.

**Table 3**

| | Wt.% |
|---|---|
| Palm stearin (IV36) | 16 |
| Potato starch (native) | 11 |
| Sugar | 2 |
| Glutamate | 15 |
| Vegetables, chicken base, herbs, flavouring | 16 |
| Salt | 40 |

Gellan-containing bouillon powders were prepared by adding gellan (Kelcogel® LT100P (>97% through 42 mesh = 355 µm), ex CPKelco U.S.) to the aforementioned bouillon powder in the concentrations indicated in Table 4.

**Table 4**

| Sample | Gellan gum added (% by weight of bouillon powder) |
|---|---|
| 1 | 0.2 |
| 2 | 1 |
| 3 | 2.5 |

Bouillons containing the same amount of bouillon powder (20 g/l) and different levels of gellan gum were prepared by mixing the powders into boiling water, followed by boiling under stirring for 3 more minutes.

The hot bouillons were served in 150 ml quantities in preheated china soup bowls to 14 members of a QDA panel that had previously been trained to describe the sensory characteristics of bouillons using a set of sensory descriptors. These descriptors included attributes related to appearance, odour, mouthfeel, taste, aftertaste and afterfeel. The individual attributes were scored on a scale of 0 to 15, a high score indicating that the attribute is very noticeable.

The products were offered to the panellists sequentially with intervals of 5 minutes, and were identified by a 3-digit code. Tap water and cream crackers were used by the panellists as a palate cleanser.

A mean score was calculated for each of the sensory attributes that were used to by each panellist describe the bouillons. Within the large set of sensory attributes that the QDA panel used to describe the tested samples, significant differences were observed for the sensory attributes shown in Table 5.

**Table 5**

| | **Control** | **Gellan gum 0.2%** | **Gellan gum 1%** | **Gellan gum 2.5%** |
|---|---|---|---|---|
| Thick mouthfeel¹ | 2.3 | 1.9 | 2.7 | 4.3 |
| Slithery/jelly mouthfeel² | 1.3 | 1.3 | 2.0 | 4.0 |

| | | | | |
|---|---|---|---|---|
| ¹ degree of thickness when the bouillon is moved around within the mouth ² degree of slithery feeling in the mouth | | | | |

### Comparative Example

Bouillons were prepared from a bouillon powder containing added gelatin and from a control sample without added gelatin, and evaluated by a QDA panel. The procedure followed was the same as in Example 3. The amount of gelatin added was 75% by weight of bouillon powder.

Despite the very high level of gelatin addition, the QDA panel did not detect statistically significant differences for any of the mouthfeel attributes.

## Claims

1. A savoury concentrate comprising the following components:
a) 22-85 wt.% inorganic salt;
b) 2-60 wt.% fat;
c) 0.8-8 wt.% of gellan gum;
d) 0-25 wt.% of glutamate component selected from glutamic acid, edible glutamate salts and combinations thereof;
e) 0-25 w.% starch component selected from native starch, pregelatinised starch, maltodextrin, modified starch and combinations thereof;
f) 0-20 wt.% of sugar selected from monosaccharides, disaccharides and combinations thereof;
g) 0-45 wt.% of vegetable matter selected from vegetables, herbs, spices and combinations thereof;
h) 0-10 wt.% water;
wherein the components a) to e) together constitute at least 55 wt.% of the savoury concentrate and wherein the components a) to h) together constitute at least 75 wt.% of the savoury concentrate.

2. Savoury concentrate according to claim 1, wherein the concentrate is a granulate or a shaped article.

3. Savoury concentrate according to claim 2, wherein the concentrate is a shaped article having a weight of 2-50 g, said shaped article comprising the following components:
a) 35-70 wt.% inorganic salt;
b) 5-60 wt.% fat, said fat having a solid fat content at 20°C (N₂₀) of at least 10%;
d) 0-20 wt.% of the glutamate component.

4. Savoury concentrate according to claim 2, wherein the concentrate is a granulate having a mass weighted average diameter in the range of 0.1-5 mm, said granulate comprising the following components:
a) 35-85 wt.% inorganic salt;
b) 3-20 wt.% fat;
d) 2-20 wt.% of the glutamate component.

5. Savoury concentrate according to any one of the preceding claims, wherein the inorganic salt is selected from sodium chloride, potassium chloride and combinations thereof.

6. Savoury concentrate according to any one of the preceding claims, wherein the savoury concentrate contains 3-20 wt.% of the starch component.

7. Savoury concentrate according to any one of the preceding claims, wherein the savoury concentrate contains 1-6 wt.% of gellan gum.

8. Savoury concentrate according to any one of the preceding claims, wherein the gellan gum is high acyl gellan gum.

9. A method of preparing a savoury product selected from a broth, a bouillon, a soup, a sauce or a gravy, said method comprising the addition of a savoury concentrate according to any one of the preceding claims.

10. A process of preparing a savoury concentrate according to any one of claims 1 to 8, said process comprising:
• providing a savoury concentrate mixture containing:
∘ 22-85 wt.% inorganic salt;
∘ 2-60 wt.% fat;
∘ 0.8-8 wt.% of gellan gum;
∘ optional further components; and
• converting the savoury concentrate mixture into shaped articles or granules.

11. Process according to claim 10, wherein the process comprises compressing the savoury concentrate mixture into shaped articles or granules.

12. Process according to claim 10 or 11, wherein the process comprising incorporating the gellan gum in the form of a powder having a mass weighted average diameter of 30-600 µm.

## Patentansprüche

1. Wohlschmeckendes Konzentrat, umfassend die folgenden Bestandteile:
a) 22-85 Gew.-% anorganisches Salz;
b) 2-60 Gew.-% Fett;
c) 0,8-8 Gew.-% Gellan-Gummi;
d) 0-25 Gew.-% Glutamat-Bestandteil, ausgewählt aus Glutaminsäure, essbaren Glutamatsalzen und Kombinationen davon;
e) 0-25 Gew.-% Stärke-Bestandteil, ausgewählt aus nativer Stärke, vorgelatinierter Stärke, Maltodextrin, modifizierter Stärke und Kombinationen davon;
f) 0-20 Gew.-% Zucker, ausgewählt aus Monosacchariden, Disacchariden und Kombinationen davon;
g) 0-45 Gew.-% pflanzliches Material, ausgewählt aus Gemüse, Kräutern, Gewürzen und Kombinationen davon;
h) 0-10 Gew.-% Wasser;
wobei die Bestandteile a) bis e) zusammen mindestens 55 Gew.-% des wohlschmeckenden Konzentrats ausmachen und wobei die Bestandteile a) bis h) zusammen mindestens 75 Gew.-% des wohlschmeckenden Konzentrats ausmachen.

2. Wohlschmeckendes Konzentrat nach Anspruch 1, wobei das Konzentrat ein Granulat oder ein geformter Gegenstand ist.

3. Wohlschmeckendes Konzentrat nach Anspruch 2, wobei das Konzentrat ein geformter Gegenstand ist, der ein Gewicht von 2-50 g aufweist, wobei der geformte Gegenstand die folgenden Bestandteile umfasst:
a) 35-70 Gew.-% anorganisches Salz;
b) 5-60 Gew.-% Fett, wobei das Fett einen Festfettgehalt bei 20°C (N₂₀) von mindestens 10% aufweist;
d) 0-20 Gew.-% des Glutamat-Bestandteils.

4. Wohlschmeckendes Konzentrat nach Anspruch 2, wobei das Konzentrat ein Granulat ist, das einen massegewichteten mittleren Durchmesser in dem Bereich von 0,1-5 mm aufweist, wobei das Granulat die folgenden Bestandteile umfasst:
a) 35-85 Gew.-% anorganisches Salz;
b) 3-20 Gew.-% Fett;
d) 2-20 Gew.-% des Glutamat-Bestandteils.

5. Wohlschmeckendes Konzentrat nach irgendeinem der vorhergehenden Ansprüche, wobei das anorganische Salz aus Natriumchlorid, Kaliumchlorid und Kombinationen davon ausgewählt ist.

6. Wohlschmeckendes Konzentrat nach irgendeinem der vorhergehenden Ansprüche, wobei das wohlschmeckende Konzentrat 3-20 Gew.-% Stärke-Bestandteil enthält.

7. Wohlschmeckendes Konzentrat nach irgendeinem der vorhergehenden Ansprüche, wobei das wohlschmeckende Konzentrat 1-6 Gew.-% Gellan-Gummi enthält.

8. Wohlschmeckendes Konzentrat nach irgendeinem der vorhergehenden Ansprüche, wobei das Gellan-Gummi Gellan-Gummi mit hohem Acyl-Anteil ist.

9. Verfahren zur Herstellung eines wohlschmeckenden Produktes, ausgewählt aus einer Brühe, einer Bouillon, einer Suppe, einer Soße oder einem Bratensaft, wobei das Verfahren die Zugabe eines wohlschmeckenden Konzentrats nach irgendeinem der vorhergehenden Ansprüche umfasst.

10. Verfahren zur Herstellung eines wohlschmeckenden Konzentrats nach irgendeinem der Ansprüche 1 bis 8, wobei das Verfahren umfasst:
• Bereitstellen einer Mischung eines wohlschmeckenden Konzentrats, enthaltend:
∘ 22-85 Gew.-% anorganisches Salz;
∘ 2-60 Gew.-% Fett;
∘ 0,8-8 Gew.-% Gellan-Gummi;
∘ wahlweise weitere Bestandteile; und
• Überführen der Mischung des wohlschmeckenden Konzentrats in geformte Gegenstände oder in ein Granulat.

11. Verfahren nach Anspruch 10, wobei das Verfahren das Komprimieren der Mischung des wohlschmeckenden Konzentrats zu geformten Gegenständen oder zu einem Granulat umfasst.

12. Verfahren nach Anspruch 10 oder 11, wobei das Verfahren die Einverleibung des Gellan-Gummis in der Form eines Pulvers mit einem massegewichteten mittleren Durchmesser von 30-600 µm umfasst.

## Revendications

1. Concentré salé comprenant les composants suivants :
a) de 22 à 85 % en poids de sel inorganique ;
b) de 2 à 60 % en poids de matière grasse ;
c) de 0,8 à 8 % en poids de gomme gellane ;
d) de 0 à 25 % en poids de composant glutamate choisi parmi l'acide glutamique, les sels de glutamate comestibles et des combinaisons de ceux-ci ;
e) de 0 à 25 % en poids de composant amidon choisi parmi l'amidon naturel, l'amidon prégélatinisé, la maltodextrine, l'amidon modifié et des combinaisons de ceux-ci ;
f) de 0 à 20 % en poids de sucre choisi parmi les monosaccharides, les disaccharides et des combinaisons de ceux-ci ;
g) de 0 à 45 % en poids d'une matière végétale choisie parmi les légumes, les herbes, les épices et des combinaisons de ceux-ci ;
h) de 0 à 10 % en poids d'eau ;
dans lequel les composants a) à e) constituent ensemble au moins 55 % en poids du concentré salé et dans lequel les composants a) à h) constituent ensemble au moins 75 % en poids du concentré salé.

2. Concentré salé selon la revendication 1, dans lequel le concentré est un granulé ou un article façonné.

3. Concentré salé selon la revendication 2, dans lequel le concentré est un article façonné ayant un poids de 2 à 50 g, ledit article façonné comprenant les composants suivants :
a) de 35 à 70 % en poids de sel inorganique ;
b) de 5 à 60 % en poids de matière grasse ayant une teneur en matière grasse solide à 20 °C (N₂₀) d'au moins 10 % ;
d) de 0 à 20 % en poids du composant glutamate.

4. Concentré salé selon la revendication 2, dans lequel le concentré est un granulé ayant un diamètre moyen en masse compris dans la plage de 0,1 à 5 mm, ledit granulé comprenant les composants suivants :
a) de 35 à 85 % en poids de sel inorganique ;
b) de 3 à 20 % en poids de matière grasse ;
d) de 2 à 20 % en poids du composant glutamate.

5. Concentré salé selon l'une quelconque des revendications précédentes, dans lequel le sel inorganique est choisi parmi le chlorure de sodium, le chlorure de potassium et des combinaisons de ceux-ci.

6. Concentré salé selon l'une quelconque des revendications précédentes, dans lequel le concentré salé contient de 3 à 20 % en poids du composant amidon.

7. Concentré salé selon l'une quelconque des revendications précédentes, dans lequel le concentré salé contient de 1 à 6 % en poids de gomme gellane.

8. Concentré salé selon l'une quelconque des revendications précédentes, dans lequel la gomme gellane est une gomme gellane riche en acyle.

9. Procédé de préparation d'un produit salé choisi parmi un potage, un bouillon, une soupe, une sauce ou un jus de viande, ledit procédé comprenant l'ajout d'un concentré salé selon l'une quelconque des revendications précédentes.

10. Procédé de préparation d'un concentré salé selon l'une quelconque des revendications 1 à 8, ledit procédé comprenant :
• l'utilisation d'un mélange de concentré salé contenant :
∘ de 22 à 85 % en poids de sel inorganique ;
∘ de 2 à 60 % en poids de matière grasse ;
∘ de 0,8 à 8 % en poids de gomme gellane ;
∘ d'autres composants facultatifs ; et
• la conversion du mélange de concentré salé en des articles façonnés ou des granulés.

11. Procédé selon la revendication 10, dans lequel le procédé comprend la compression du mélange de concentré salé en des articles façonnés ou des granulés.

12. Procédé selon la revendication 10 ou 11, dans lequel le procédé comprend l'incorporation de la gomme gellane sous la forme d'une poudre ayant un diamètre moyen en masse de 30 à 600 µm.
